# EUROPÄISCHE PATENTSCHRIFT

(11) **EP 1 566 725 B1**
(45) Veröffentlichungstag und Bekanntmachung des Hinweises auf die Patenterteilung: **09.01.2008**
(21) Anmeldenummer: 05075148.6
(22) Anmeldetag: 19.01.2005
(51) Int. Cl.: G06F 1/32

(54) **Verfahren und Vorrichtung zum Netzmanagement für Steuergeräte**
Method and arrangement for network management of control devices
Procédé et système de gestion de réseaux de dispositifs de commande

(30) Priorität: 19.02.2004 DE 102004008543
(43) Veröffentlichungstag der Anmeldung: 24.08.2005
(73) Patentinhaber: Volkswagen AG, 38436 Wolfsburg (DE)
(72) Erfinder: Pöppel, Armin, 85080 Gaimersheim (DE); Hoffmann, Christoph, 38446 Wolfsburg (DE)
(74) Vertreter: Patentanwälte Bressel und Partner

(56) Entgegenhaltungen:
- EP-A- 1 473 880
- US-A- 5 560 033
- US-A1- 2004 049 705

## Beschreibung

Die Erfindung betrifft ein Verfahren und eine Vorrichtung zum Netzmanagement für Steuergeräte.

Elektronische Steuergeräte werden unter anderem in Fahrzeugen, Flugzeugen und Automaten eingesetzt. Die Steuergeräte sind über Busleitungen beispielsweise einen CAN-Bus oder einen FlexRay-Bus für einen Austausch von Daten verbunden. Steuergeräte eines Bussystems werden von einem Netz, beispielsweise dem Bordnetz, mit Energie versorgt.

Für eine Verringerung des Energiebedarfs ist es bekannt, Steuergeräte, welche zeitweise nicht für Funktionen und/oder Anwendungen benötigt oder gewünscht sind, in einen "Sleep"-Zustand zu versetzen. Steuergeräte im "Sleep"-Zustand sind von der Kommunikation über das Bussystem auszuschließen.

Dabei ist es bekannt, dass ein Steuergerät zur Signalisierung einer Schlafbereitschaft eine Botschaft sendet, wobei ein weiteres empfangendes Steuergerät, die Botschaft auswertet und dadurch die Schlafbereitschaft erkennt. Für eine eindeutige Identifikation des Signals ist mindestens ein weiteres Steuergerät an der Auswertung zu beteiligen. Eine Signalisierung erfolgt beispielsweise über "Sleep"-Indikation und "Sleep"-Acknowledgement Bits.

US 5560033 offenbart das Verwenden von "heartbeat messages". Das Ausbleiben solcher zyklischen Nachrichten verursacht bei einer zentralen Überwachungseinheit das Auslösen einer Fehlerbehandlungsmaßnahme.

Der Erfindung liegt das technische Problem zugrunde, ein Verfahren und eine Vorrichtung zu schaffen, durch welche ein Netzmanagement der Steuergeräte vereinfacht wird.

Die Lösung des Problems ergibt sich durch die Gegenstände mit den Merkmalen der Patentansprüche 1 und 6. Weitere vorteilhafte Ausgestaltungen der Erfindung ergeben sich aus den Unteransprüchen.

Hierfür sendet ein Steuergerät eines Bussystems mit mehreren Steuergeräten eine Netzmanagement-Botschaft zyklisch wiederholt. Eine Schlafbereitschaft wird durch Ausfall der Netzmanagement-Botschaft signalisiert. Dadurch entfällt die Notwendigkeit, die empfangene Botschaft auszuwerten, um eine Schlafbereitschaft zu erkennen.

In einer bevorzugten Ausführungsform werden ausgefallene Steuergeräte als schlafbereit eingestuft. Die ist vorteilhaft, da Fehleralgorithmen für eine Funktionssteuerung der Netzversorgung genutzt werden können.

In einer weiteren bevorzugten Ausführungsform wird ein dem Bussystem zugeordnetes Netzwerk in einen "Sleep"-Zustand überführt, wenn alle Steuergeräte des Netzwerks schlafbereit sind. Durch eine Funktionssteuerung des Netzwerks durch eine Erkennung der Schlafbereitschaft der Steuergeräte werden Ressourcen in den Steuergeräten gespart. Dies ist insbesondere bei dauerversorgten Steuergeräten von Vorteil. Dabei ist es denkbar, dass alle Steuergeräte des Bussystems durch ein Netzwerk versorgt werden. Daneben ist es jedoch auch denkbar, dass mehrere Netzwerke vorhanden sind, durch welche jeweils mindestens ein Steuergerät des Bussystems versorgt wird.

In einer weiteren bevorzugten Ausführungsform erfolgt der Übergang in einen "Sleep"-Zustand des Netzwerks nach einer Busberuhigungsphase. In der Busberuhigungsphase sind Sendefunktionen abgeschaltet und Empfangsfunktionen aktiviert. Durch die Busberuhigungsphase wird verhindert, dass noch aktive Steuergeräte bereits schlafende Steuergeräte aufwecken.

In einer weiteren Ausführungsform wird ein Hochlauf des Netzwerks durch einen Empfang einer Netzmanagement-Botschaft eines Steuergeräts ausgelöst. Eine (Re-)Aktivierung eines Steuergeräts erfolgt durch einen Nutzer, beispielsweise durch Tastendruck, und/oder bei Bedarf durch ein verbundenes aktives Steuergerät. Nach einer (Re-)Aktivierung sendet das Steuergerät zyklisch die ihm zugeordnete Netzmanagement-Botschaft. Dadurch wird das zugehörige Netzwerk geweckt. Ein Wecken und/oder ein Übergang in den "Sleep"-Zustand sind durch ein beliebiges Steuergerät des Netzwerks möglich. Die Schaltung ist hierfür beispielsweise als Kreuzschaltung ausgebildet.

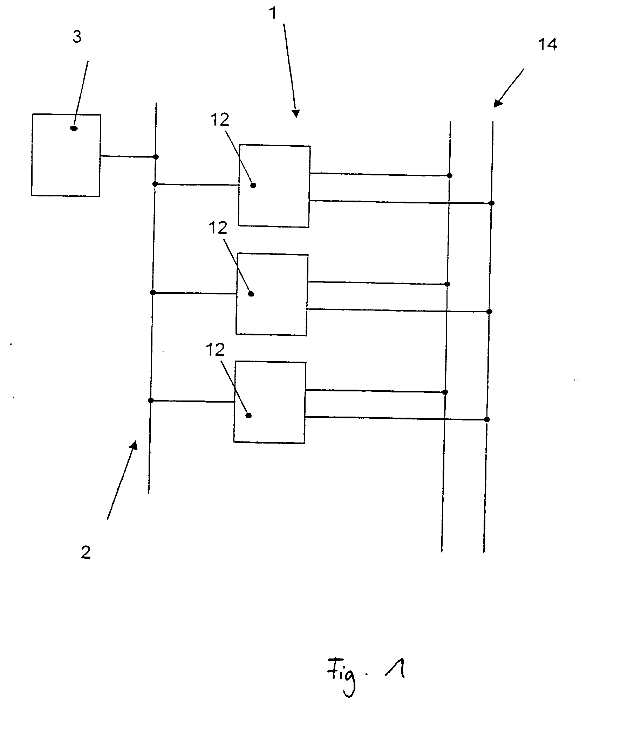

Die Erfindung wird nachfolgend anhand eines bevorzugten Ausführungsbeispiels näher erläutert. Die einzige Figur zeigt eine schematische Darstellung eines Bussystems mit dezentralem direkten Netzmanagement.

Die Figur zeigt ein Bussystem 1 umfassend Steuergeräte 12 und Busleitungen 14. Das Bussystem 1 ist als CAN-Bus-System ausgebildet. Die Steuergeräte 12 werden dauerhaft über eine Leitung 2 von einer Netzquelle 3 gespeist.

Wird ein Steuergerät 12 nicht länger benötigt und/oder gewünscht, so kann es zur Einsparung von Energie in einen "Sleep"-Zustand versetzt werden. Bei einem -in der Figur nicht dargestellten- nicht dauerversorgten Steuergerät ist zu diesem Zweck beispielsweise die Verbindung zur Netzquelle 3 unterbrechbar.

Jedes Steuergerät 12 sendet zyklisch wiederholt eine ihm zugeordnete Netzmanagement-Botschaft über die Busleitung 14. Eine Schlafbereitschaft eines Steuergeräts 12 ist dadurch den über die Busleitung 14 verbundenen Steuergeräten durch Ausfall der Netzmanagement-Botschaft signalisierbar. Ausgefallene Steuergeräte werden für das Netzmanagement wie schlafbereite Steuergeräte behandelt.

Sind alle dauerversorgten Steuergeräte 12 eines Netzwerks schlafbereit, so wird das Netzwerk in einen "Sleep"-Zustand überführt. Die Überführung in den "Sleep"-Mode erfolgt nach einer Busberuhigungsphase, in welcher ein Senden der Steuergeräte abgeschaltet ist, ein Empfang von Signalen aber noch möglich ist.

Eine Überführung des Netzwerks in den "Sleep"-Zustand ist bei einem dezentralen Netzmangement nach Zustimmung aller Netzknoten durch jeden Netzknoten möglich. Ein Hochlauf des Netzwerks wird in jeder Phase durch den Empfang einer Netzmanagement-Botschaft eines Knotens ausgelöst.

## Patentansprüche

1. Verfahren zum Netzmanagement für Steuergeräte eines Bussystems, wobei ein Steuergerät eine Netzmanagement-Botschaft sendet,
**dadurch gekennzeichnet, dass**
das Steuergerät (12) die Netzmanagement-Botschaft zyklisch wiederholt sendet und eine Schlafbereitschaft durch Ausfall der Netzmanagement-Botschaft signalisiert wird.

2. Verfahren nach Anspruch 1, **dadurch gekennzeichnet, dass** ausgefallene Steuergeräte (12) als schlafbereit eingestuft werden.

3. Verfahren nach Anspruch 1 oder 2, **dadurch gekennzeichnet, dass** ein dem Bussystem (1) zugeordnetes Netzwerk (2, 3) in einen "Sleep"-Zustand überführt, wenn alle Steuergeräte (12) des Netzwerks (2, 3) schlafbereit sind.

4. Verfahren nach Anspruch 3, **dadurch gekennzeichnet, dass** der Übergang in einen "Sleep"-Zustand des Netzwerks (2, 3) nach einer Busberuhigungsphase erfolgt, wobei in der Busberuhigungsphase Sendefunktionen abgeschaltet werden und Empfangsfunktionen aktiviert bleiben.

5. Verfahren nach einem der vorangegangen Ansprüche, **dadurch gekennzeichnet, dass** ein Hochlauf des Netzwerks (2, 3) durch einen Empfang einer Netzmanagement-Botschaft mindestens eines Steuergeräts (12) ausgelöst wird.

6. Vorrichtung zum Netzmanagement für Steuergeräte eines Bussystems, wobei durch ein Steuergerät eine Netzmanagement-Botschaft sendbar ist,
**dadurch gekennzeichnet, dass**
die Netzmanagement-Botschaft eines Steuergeräts (12) zyklisch wiederholt sendbar ist und eine Schlafbereitschaft durch Ausfall der Netzmanagement-Botschaft signalisiert wird.

7. Vorrichtung nach Anspruch 6, **dadurch gekennzeichnet, dass** ausgefallene Steuergeräte (12) als schlafbereit eingestuft sind.

8. Vorrichtung nach Anspruch 6 oder 7, **dadurch gekennzeichnet, dass** ein dem Bussystem (1) zugeordnetes Netzwerk (2, 3) in einen "Sleep"-Zustand überführbar ist, wenn alle Steuergeräte (12) des Netzwerks (2, 3) schlafbereit sind.

9. Vorrichtung nach Anspruch 8 umfassend Mittel zur Erkennung einer Busberuhigungsphase, wobei der Übergang in einen "Sleep"-Zustand des Netzwerks (2, 3) nach Ablauf der Busberuhigungsphase erfolgt und in der Busberuhigungsphase Sendefunktionen abgeschaltet und Empfangsfunktionen aktiviert sind.

10. Vorrichtung nach einem der Ansprüche 6 bis 9, **dadurch gekennzeichnet, dass** ein Hochlauf des Netzwerks (2, 3) durch einen Empfang einer Netzmanagement-Botschaft mindestens eines Steuergeräts (12) auslösbar ist.

## Claims

1. Method for performing network management of control devices of a bus system, wherein a control device transmits a network management message, **characterized in that** the control device (12) transmits the network management message in a cyclically repeating fashion and signals a ready-to-sleep state through failure of the network management message.

2. Method according to Claim 1, **characterized in that** failed control devices (12) are categorized as ready to sleep.

3. Method according to Claim 1 or 2, **characterized in that** a network (2, 3) which is assigned to the bus system (1) is placed in a sleep state if all the control devices (12) of the network (2, 3) are ready to sleep.

4. Method according to Claim 3, **characterized in that** the changeover into a sleep state of the network (2, 3) takes place after a bus calming phase, wherein in the bus calming phase transmission functions are switched off and reception functions remain activated.

5. Method according to one of the preceding claims, **characterized in that** running up of the network (2, 3) is triggered by reception of a network management message of at least one control device (12).

6. Device for performing network management of control devices of a bus system, wherein a network management message can be transmitted by a control device, **characterized in that** the network management message of a control device (12) can be transmitted in a cyclically repeated fashion and a ready-to-sleep state is signalled by failure of the network management message.

7. Device according to Claim 6, **characterized in that** failed control devices (12) are categorized as ready to sleep.

8. Device according to Claim 6 or 7, **characterized in that** a network (2, 3) which is assigned to the bus system (1) can be placed in a sleep state if all the control devices (12) of the network (2, 3) are ready to sleep.

9. Device according to Claim 8 comprising means for detecting a bus calming phase, wherein the changeover into a sleep state of the network (2, 3) takes place after the bus calming phase has expired, and in the bus calming phase transmission functions are switched off and reception functions are activated.

10. Device according to one of Claims 6 to 9, **characterized in that** running up of the network (2, 3) can be triggered by reception of a network management message of at least one control device (12).

## Revendications

1. Procédé de gestion de réseau d'équipements de commande d'un système de bus, un équipement de commande émettant un message de gestion de réseau, **caractérisé en ce que** l'équipement de commande (12) répète l'émission du message de gestion de réseau de manière cyclique et qu'une mise en sommeil est signalée par l'absence du message de gestion de réseau.

2. Procédé selon la revendication 1, **caractérisé en ce que** les équipement de commande (12) en panne sont classés comme prêts au sommeil.

3. Procédé selon la revendication 1 ou 2, **caractérisé en ce qu'**un réseau (2, 3) attribué au système de bus (1) passe dans un état de "Sleep" lorsque tous les équipement de commande (12) du réseau (2, 3) sont prêts au sommeil.

4. Procédé selon la revendication 3, **caractérisé en ce que** le passage du réseau (2, 3) dans un état de "Sleep" a lieu après une phase de mise au repos du bus, les fonctions d'émission étant arrêtées et les fonctions de réception restant activées dans la phase de mise au repos du bus.

5. Procédé selon une des revendications précédentes, **caractérisé en ce qu'**une activation du réseau (2, 3) est déclenchée par la réception d'un message de gestion de réseau d'au moins un équipement de commande (12).

6. Dispositif de gestion de réseau d'équipements de commande d'un système de bus, un équipement de commande pouvant émettre un message de gestion de réseau, **caractérisé en ce que** le message de gestion de réseau d'un équipement de commande (12) peut être émis de manière cyclique répétée et qu'une mise en sommeil est signalée par l'absence du message de gestion de réseau.

7. Dispositif selon la revendication 6, **caractérisé en ce que** des équipements de commande (12) en panne sont classés comme prêts au sommeil.

8. Dispositif selon la revendication 6 ou 7, **caractérisé en ce qu'**un réseau (2, 3) attribué au système de bus (1) peut être placé dans un état de "Sleep" lorsque tous les équipements de commande (12) du réseau (2, 3) sont prêts au sommeil.

9. Dispositif selon la revendication 8 comprenant des moyens pour reconnaître une phase de mise au repos du bus, le passage du réseau (2, 3) dans un état de "Sleep" ayant lieu après le déroulement de la phase de mise au repos du bus et les fonctions d'émission étant arrêtées et les fonctions de réception restant activées dans la phase de mise au repos du bus.

10. Dispositif selon une des revendications 6 à 9, **caractérisé en ce qu'**une activation du réseau (2, 3) peut être déclenchée par la réception d'un message de gestion de réseau d'au moins un équipement de commande (12).
